Europäisches Patentamt

European Patent Office

Office européen des brevets

(11) Publication number: **0 220 345 B1**

# EUROPEAN PATENT SPECIFICATION

(45) Date of publication of patent specification: **06.03.91**　　(51) Int. Cl.5: **C02F 7/00, E02B 1/00, A01K 63/04**

(21) Application number: **85307535.6**

(22) Date of filing: **18.10.85**

(54) Water aeration apparatus.

(43) Date of publication of application:
**06.05.87 Bulletin 87/19**

(45) Publication of the grant of the patent:
**06.03.91 Bulletin 91/10**

(84) Designated Contracting States:
**DE FR GB**

(56) References cited:
**FR-A- 2 557 559**
**US-A- 3 148 509**
**US-A- 4 231 863**
**US-A- 4 293 506**
**US-A- 4 436 675**

(73) Proprietor: **Kaiyo Kogyo Kabushiki Kaisha**
**1-11 Akihabara**
**Taito-ku Tokyo(JP)**

(72) Inventor: **Makino, Hisao**
**18-13, Hirata 2-chome**
**Ichikawa Chiba(JP)**
Inventor: **Makino, Masahiko**
**Heights-Orange 201, 25-3 Higashi-Funabashi**
**4-chome**
**Funabashi Chiba(JP)**

(74) Representative: **Godwin, Edgar James et al**
**MARKS & CLERK 57-60 Lincoln's Inn Fields**
**London, WC2A 3LS(GB)**

## Description

The present invention relates to water aeration apparatus, more particularly to aeration apparatus which takes advantage of the raising or suction action of air under pressure to cause a large amount of water to be exposed to that action for aeration purposes or water purification as well as anti-freezing purposes in water-filled areas such as dams, impounding reservoirs, and lakes and marshes.

A conventional water aeration apparatus of the kind using the raising or suction action of air to be supplied under pressure is actually used for aeration purposes in dam or impounding reservoir installations or natural water resouces such as lakes and marshes, and is known to provide an effective means for that purpose (as disclosed in the Japanese Utility Model Official Publication as opened to the public inspection under No. 57 (1982) - 39117).

The conventional apparatus comprises an air lift pump including a tubular casing, which has a single passage through which water is pumped up by its exposure to the action of air suppled under pressure, and the passage has a bore diameter range of between 40 cm and 50 cm. Because of the single water passage construction, the single tubular casing has its capacity limitations in handling water at a time. When this apparatus is used in a dam installation or elsewhere which contains water to a depth of for example 20 m or more, each tubular casing is required to be installed for one million volumetric tons of water to be handled. Therefore, it is necessary to increase the number of the individual tubular casing installations as the volume of water to be handled increases.

It should readily be understood from the above that for the single passage tubular casing, ten tubular casing installations are required for handling ten million volumetric tons of water, and one hundred installations are required for one hundred million tons of water, which can easily be found from the simple calculation. The corresponding additional number of installations are required for additional tons of water. Increasing the number of the individual tublar casing installations results in increasing the number of the accompanying equipment such as air supply hoses, air compressors, and motors, which require more regular or occasional maintenance service. This raises a problem to be solved. As one solution, it may be suggested that the number of individual tubular casing installations be reduced by increasing the traverse cross section or bore diameter of a single tubular casing. Increasing the diameter, however, leads to a considerable increase in the volumetric capacity of an air chamber which is located below the tubular casing. The volume of such air chamber may be found from the following equation, for example:

$$V = k \frac{4}{3} \pi r^3$$

where K is a factor of 0.3 to 1.0, r is a radius of a tubular casing, and V is the volume of an air chamber.

It can be seen from the above equation that the volume of the air chamber increases in proportion to the cube of the radius of the tubular casing. Thus, increasing the diameter for the tubular casing poses a problem since it requires more air supply. This is undesirable from the energy saving needs.

The present invention provides a water circulation installation in an extensive body of water such as a reservoir or like, the installation being arranged to cause large water circulation between the water surface and bottom by buoyant action of single air bubbles having a certain volume and being intermittently supplied into the lower end of column which is vertically installed in the body of the water, the installation comprising: a column vertically installed in the body of water, the upper end of the column being spaced, e. g. by 5 to 10 m, below the surface of the water and there being no obstruction above the said upper end; and an air lift pump having an air supply chamber (3; 31) located below the column and arranged to supply pressurized air at intervals into the lower end of the column; characterised in that the column has a plurality of separate longitudinal passages (1) with a small bore, preferably at most 90 cm in diameter, which communicate with the air supply chamber (3; 31); the air supply chamber has a common air space which communicates with all the passages; the air supply chamber (3; 31) receives pressurized air continuously and releases stored pressurized air into the column at one time after a certain volume of air is stored, to raise a single air bubble having a certain volume through the column at intervals, and to raise and draw water located under the column through the column under the buoyant force of large air bubbles.

This makes it possible to provide in a single column a number of smaller diameter passages sufficient to provide a total cross-section as indicated in the above equation.

Specifically, in one form, the column may comprise a number of individual tubes or pipes (for example, two to ten) having a small bore diameter (such as 30 cm to 50 cm, for example), and below those tubes a multiple-partitioned air chamber for each of the tubes or a common air chamber for all the tubes. Thus, the single column, which is installed at one site, can handle more water to be pumped up for the aeration purpose. In one embodiment, a large bore-diameter tubular casing may be divided internally to provide a plurality of longitudinal tubular passages.

The invention will be described further, by way of example only, with reference to the accompanying drawings, in which:

Fig. 1 is a front elevation of one form of the collective tubular casing embodying the present invention, which is constructed from individual tubes or pipes;

Fig. 2 is a plan view of the construction shown in Fig. 1;

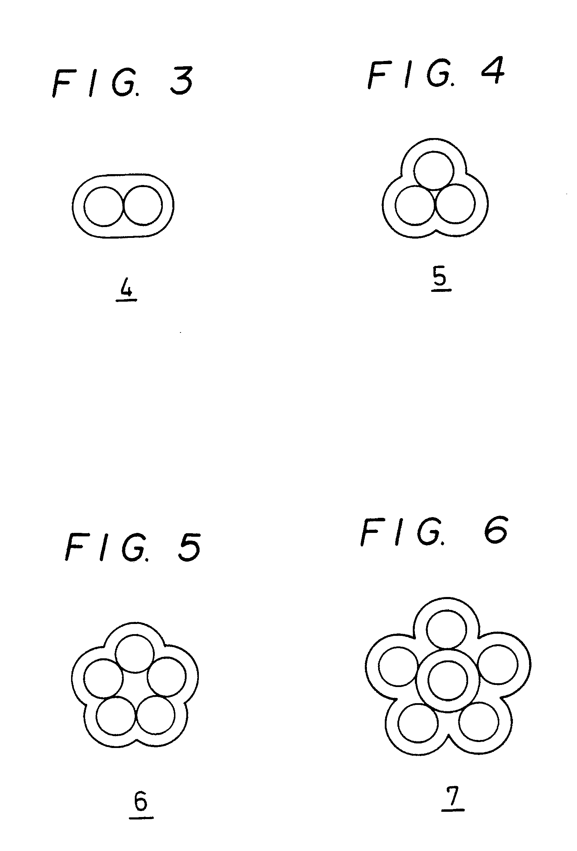

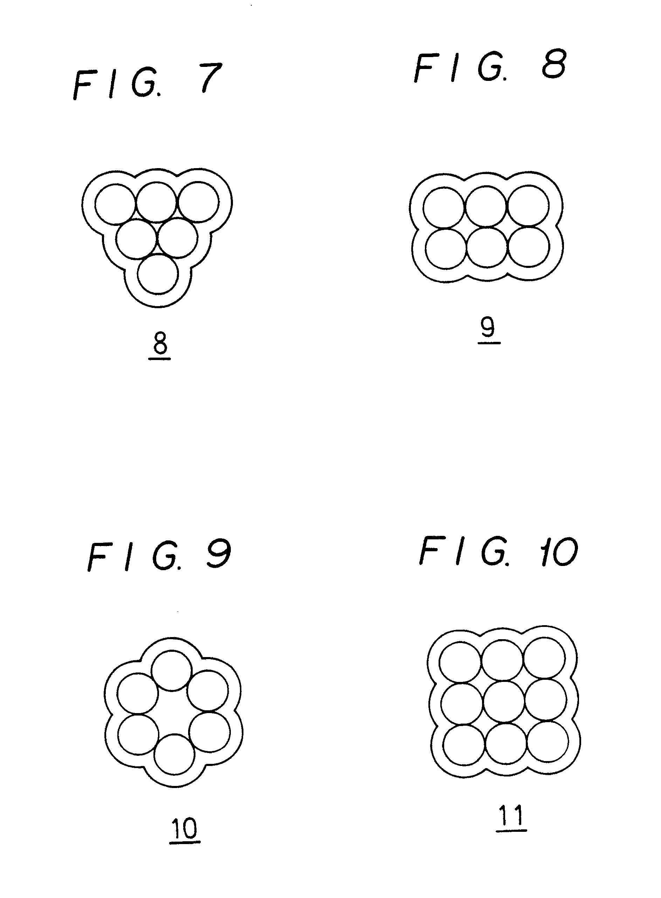

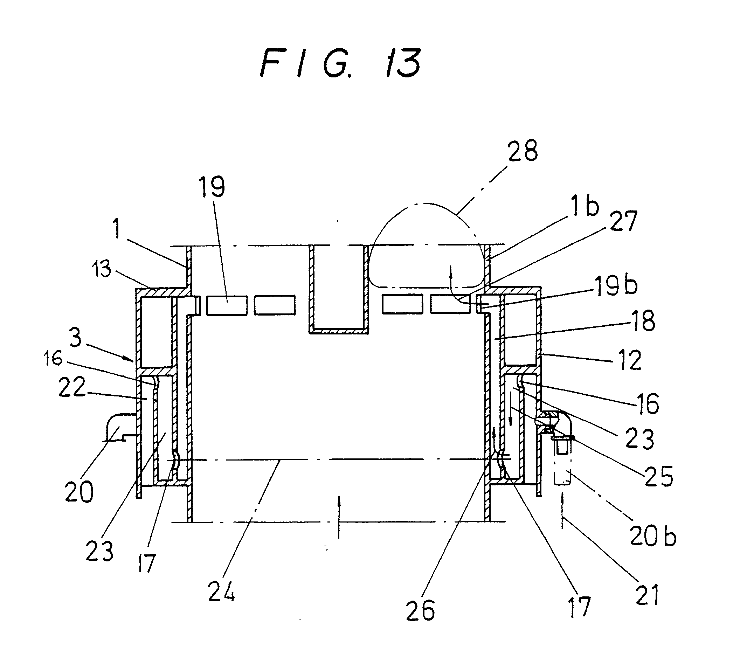

Figs. 3 through 10 illustrate different configurations as seen from the plan view, each of which includes a different number of small diameter tubes which are arranged differently: specifically, the configuration in Fig. 3 includes two tubes, the one in Fig. 4 includes three tubes arranged in a triangular form, the one in Fig. 5 includes five tubes arranged in a pentagonal form, the one in Fig. 6 shows the pentagonal arrangement including one center tube and five surrounding tubes, the one in Fig. 7 is configured to include six tubes which in this case are arranged in a triangular from, the one in Fig. 8 also includes six tubes which are arranged in two rows, Fig. 9 shows the configuration which also includes six tubes which are arranged in a circle, and Fig. 10 shows nine tubes arranged in three rows. Figs. 11 and 12 have been deleted;

Fig. 13 is an enlarged sectional view illustrating the construction of an air chamber for the embodiment shown in Fig. 1;

Fig.14 is a plan view of another embodiment including a larger diameter tubular casing internally divided into three smaller diameter longitudinal passages of an elliptic cross section;

Fig.15 is a plan view of still another embodiment including three individual small-diameter tubes bound together;

Fig.16 is a front elevation of a variation of the two preceding embodiments;

Fig.17 is a plan view of the variation in Fig. 16;

Fig.18 is an enlarged sectional view of an air chamber for the variation of Fig. 16; and

Fig.19 is a front elevation of a variation of the tubular casing in which the air chamber is located between the individual tubes and the additional water suction pipe that extends below the air chamber;

Fig. 20 is a plan view of the variation of Fig. 19;

Fig. 21 is a plan view illustrating an example of how the tubular casings are installed at different locations in a sea port or bay.

Fig. 22 illustrates a two-stage construction that consists of an upper collective tubular casing and a lower collective tubular casing;

Fig. 23 is an enlarged cross section of the two-stage construction, taken along the line A - A in Fig. 22;

Fig. 24 is an enlarged cross section of the two-stage construction, taken along the line B - B in Fig. 22;

Fig. 25 illustrates a three-stage construction consisting of upper, intermediate, and lower collective tubular casings; and

Fig. 26 is an enlarged cross-sectional view of a variation of the two-stage construction that consists of an upper collective tubular casing according to the present invention and a lower air diffusion casing connected to the upper casing.

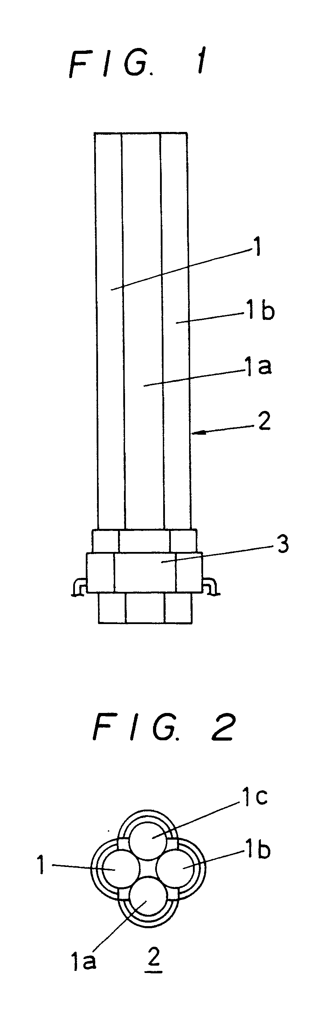

First, the embodiment shown in Figs. 1 through 13 is described in detail. As shown in those figures, this embodiment includes many possible variations in which water passage tubes may be arranged both in different numbers and in different geometrical configurations. Figs. 1 and 2 are a typical, basic example of those variations. Then, the following description is made by referring to the example shown in Figs. 1 and 2. In Figs. 1 and 2, a collective tubular casing, which is generally designated by 2, comprises a collection of smaller bore diameter tubes 1, 1a, 1b, 1c through which water is pumped up under the action of air supplied under pressure, and an air chamber 3 which is located below those tubes and supplies air under pressure. The air chamber 3 is provided as a common air chamber for all the tubes as shown in Fig. 13. The detailed construction of the air chamber in both cases will be described later. The collective tubular casing 2 shown in Figs. 1 and 2 may have many possible variations as shown in Figs. 3 through 10. In Figs. 3, it is configured to include two tubes, as designated by 4. The variation 5 in Fig. 4 includes three tubes arranged in a triangular form. Fig. 5 shows a variation 6 in which five tubes are arranged. In the variation 7 shown in Fig. 6, six tubes are used with one center tube surrounded by the five tubes. The variation 8 in Fig. 7 also uses six tubes, which are arranged in a triangular form. In Fig. 8, six tubes are arranged in two rows to form a collective tubular casing 9. Fig. 9 shows a varied configuration 10, which also includes six tubes arranged in a hexagonal form. Finally, the variation 11 in Fig. 10 includes nine tubes arranged in a square form. Collectively, those tubes determine the total diameter or area in cross section of a single tubular casing. Therefore, the total diameter may be increased by increasing the number of individual tubes, which may be more than nine tubes. For any number of individual tubes to be used, those tubes should be configured geometrically so that the collective tubular casing provides equilibrium and positional stability when it is actually installed deep in water.

In conjunction with the water pumping action of the various forms of the collective tubular casing described above, the construction of the air chamber which is located beneath the tubular casing is now described.

Figure 13 shows the air chamber 3, which provides a common air chamber for all of the individual tubes 1, 1a, 1b, 1c making up the tubular casing. A single air space is provided below the bottom ends of those tubes and communicates with each of the tubes. The air supply compartment is enclosed by an outer jacket 12 with a top end plate 13. The outer jacket 12 is hermetically mounted around the individual tubes collectively. Cylindrical partitions 14 and 15, concentrically spaced apart from each other, are inserted between the outer jacket 12 and a casing wall. As shown, for example, the cylindrical partition 14 has air communicating apertures 16 at the upper portion while the partition 15 has air communication apertures 17 at the lower portion. Thus, the gap 22 formed between the outer jacket 12 and the partition 14, and the gap 23 formed between the partitions 14 and 15 communicate with each other through the apertures 16. Similarly, the gap 23 and the gap 18 formed between the partition 15 and the casing wall communicate with each other through the apertures 17. Air communication between the gap 18 and the tubes is made through windows 19, 19b which are made in the tubes. As indicated by an arrow 21, air is supplied under pressure into the outer gap 22 from air hoses 20, 20b which connect any an external compressed air supply source, such as an air compressor. The air under pressure passes from the gap 22 through the apertures 16 into the gap 23. During the time that the air supply continuous to take place, the air is gathering upwardly inside the gaps 22 and 23 and the water level inside the tube is gradually being lowered under the action of the air.

when the above water level has been lowered down to the broken line 24 where the apertures 17 are located, the air filled inside the gaps 22 and 23 is free to flow in the direction of an arrow 25, passing through the apertures 17 in the direction of an arrow 26 and then through the apertures 19, 19b to flow into the tubes as indicated by an arrow 27. The air flow into the tubes then forms into a single air mass, like a bullet shape 28, and rises through the tubes. As the air mass rises, the portion of water above the air mass is boosted, and the portion of water located below the air mass is placed under the suction action of the air mass and is pumped up.

As long as the compressed air continues to be supplied into the air chamber, air masses are successively formed inside the tubes at time intervals (such as every thirty seconds), rising through the tubes and exerting their boost and suction action on the water above and below them. Thus, those portions of water are raised at those time intervals. In fact, when a given air mass is rising through the tubes toward the surface, the water flow through the tubes under the air mass suction is initially being raised at the same speed as the rising speed of the air mass. When the air mass reaches the surface and appears in the atmosphere above it, the water flow through the tubes has its inertia action and its rising speed becomes slightly slower. Thus, this change in the water flow speed causes intermittent jets of water, rather than a constant flow of water. The jets of water produce water rings over the surface, diffusing effectively in radial directions. Thus, a large sphere of convection is formed around the collective tubular casing, and water circulates between the surface and the depth (such as a depth of 30 m and more). This enhances the capability of the single collective tubular casing, allowing it to handle 10 million tons of water at one site.

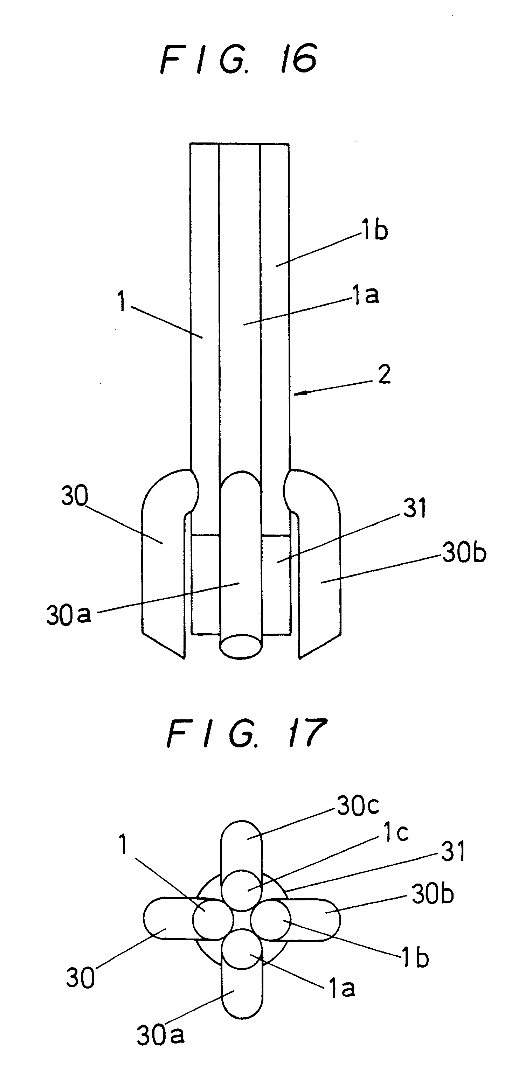

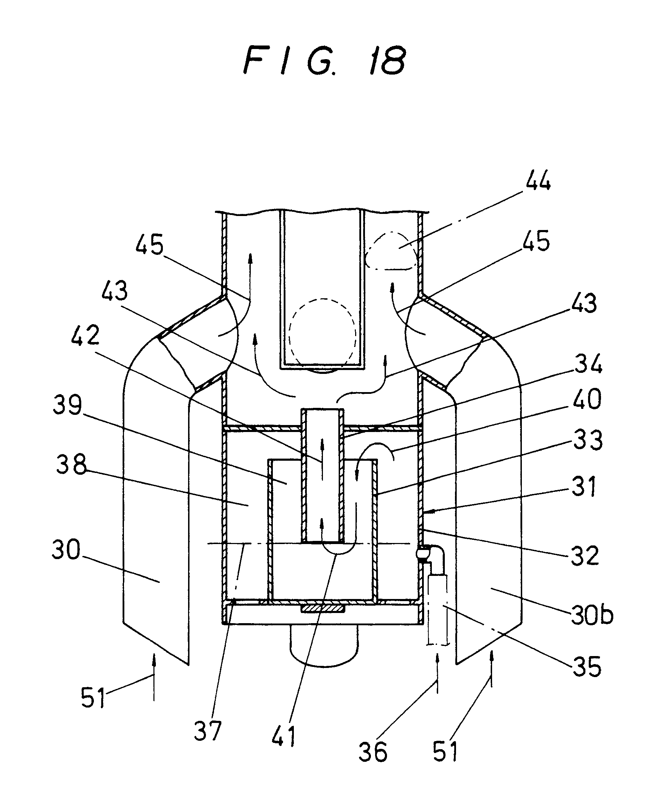

A varied form of the collective tubular casing described in the preceding embodiment is shown in Figs. 16 through 18, which includes an air supply chamber whose construction differs from the preceding one, and water suction pipes in addition to those tubes described above. For the purpose of easy comparison with the preceding embodiment, the collective tubular casing includes the same number of individual air and water passage tubes (four), but may include additional tubes. In the embodiment particularly shown in Fig. 16, the collective tubular casing 2 includes small-diameter individual tubes combined together, a common air chamber 31 which is located below the tubes and communicates with each of the tubes, and water suction pipes 30, 30a, 30b, and 30c each of which is connected with the corresponding tube. As shown particularly in Fig. 18, the air chamber 31 includes an outer jacket 32 closed at the top, an inner cylindrical partition 33 open at the top and closed at the bottom, and tubular passage 34 which extends through the closed top of the outer jacket 32 and allows air to flow therethrough into the individual tubes. Those parts 32, 33 and 34 are arranged concentrically at spaced relations with respect to each other. An compressed air is supplied from an air suction hose 35 into the air chamber 31 as indicated by an arrow 36, and gathers upwardly in the air chamber 31. As the air supply is increasing, it acts on the water in the air chamber, depressing its level down to the position where the bottom open end of the tubular passage 34 is located. This allows the air in the chamber 31 to flow through the gaps 38 and 39 and then through the tubular passage 34 as indicated by arrows 40, 41 and 42. Through the tubular passage 34, the air flow enters the space below the individual tubes, and is then distributed into each of the tubes, as indicated by an arrow 43. The portion of air in each tube forms into an air mass like a bullet shape 44, rising through the tube toward the surface. This causes water to be drawn through water sunction pipes 30, 30a, 30b, and 30c into each of the tubes under the suction of the air masses, as indicated by an arrow 51. Then, as the air masses are further rising, the portion of water in each tube is also rising through the tube, as indicated by an arrow 45.

The above described embodiment differs from the preceding embodiment in that the water suction occurs at the several points instead of the single point and the air chamber 31 is constructed accordingly. It should be understood, however, that the function provided by the embodiment in Fig. 18 is the same as that in the preceding embodiment.

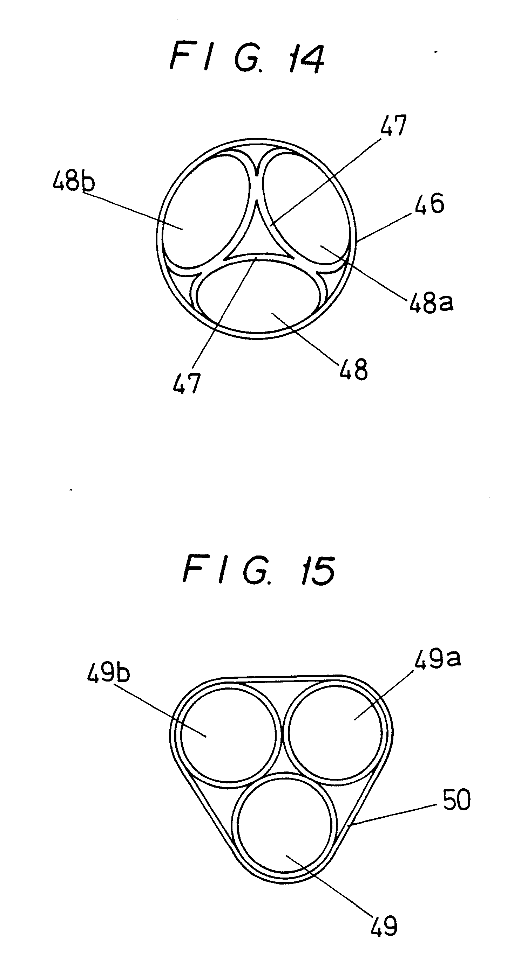

The air and water passages making up the tubular casing may be varied as shown in Figs. 14 and 15. In Fig. 14, the interior of a larger-diameter tubular caising 46 is equally divided into three separate portions 47 which are formed like an are shape, and three smaller-diameter tubes 48, 48a, and 48b forming the air and water passages are provided longitudinally. In Fig. 15, three smaller-diameter tubes 49, 49a, and 49b are bound by ropes 50, forming a collective tubular casing. In either case, the air chamber as described in the preceding embodiments may be used.

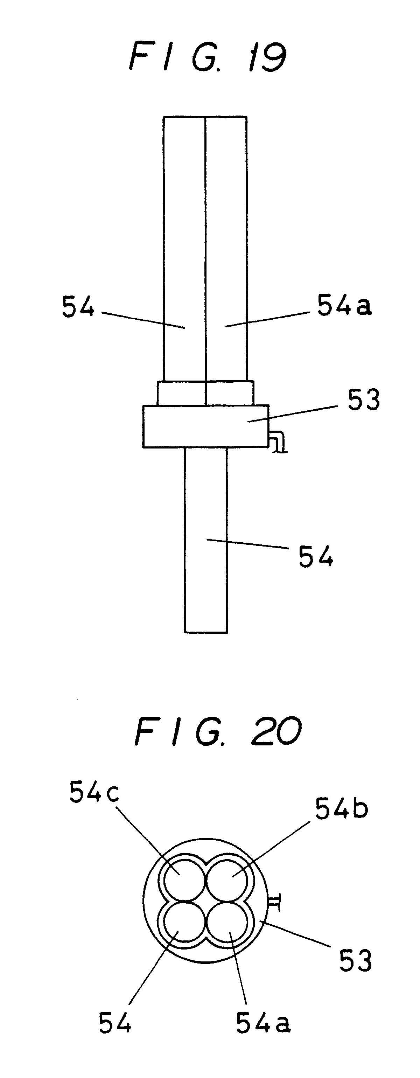

A further variation of the collective tubular casing shown in Figs. 19 and 20 includes an air chamber that is located between four individual small-bore diameter water passage tubes and an additional water suction pipe that extends below the air chamber. In its specific construction, the air chamber 53 is formed below the lower ends of the individual water passage tubes 54, 54a, 54b, and 54c so that it can communicate with each of those tubes for supplying air under pressure, and the water suction pipe 54 extends below the air chamber, through which water is rising under the suction of the air supplied from the air chamber. The length of the water suction pipe may be determined, depending upon the depth of the water in which the tubular casing is actually to be installed.

This construction described above is particularly useful in allowing deep waters, such as dam installations and lakes and marshes, to be aerated. For any lake which is 80 m deep, for example, the construction that includes the four tubes of 30 m and the water suction pipe of 20 m length may be used. This specific construction tubular casing may be installed so that the top ends of the tubes are located 5 m to 10 m deep beneath the water surface, and air may be supplied under the low atmospheric pressure equivalent to about 2 atms.

Under those conditions, the portion of water which is located 50 m to 60 m deep can effectively be subjected to the aeration. The fact that air can be supplied under such low pressure allows for the use of any low-pressure air supply equipment. The use of the low-pressure air supply makes the total system including the other accompanying equipment less costly than using the high-pressure air supply. This also reduces any difference in the air volumetric capacity between the air chamber and the upper portions of the individual tubes. As such, the operation can continue smoothly.

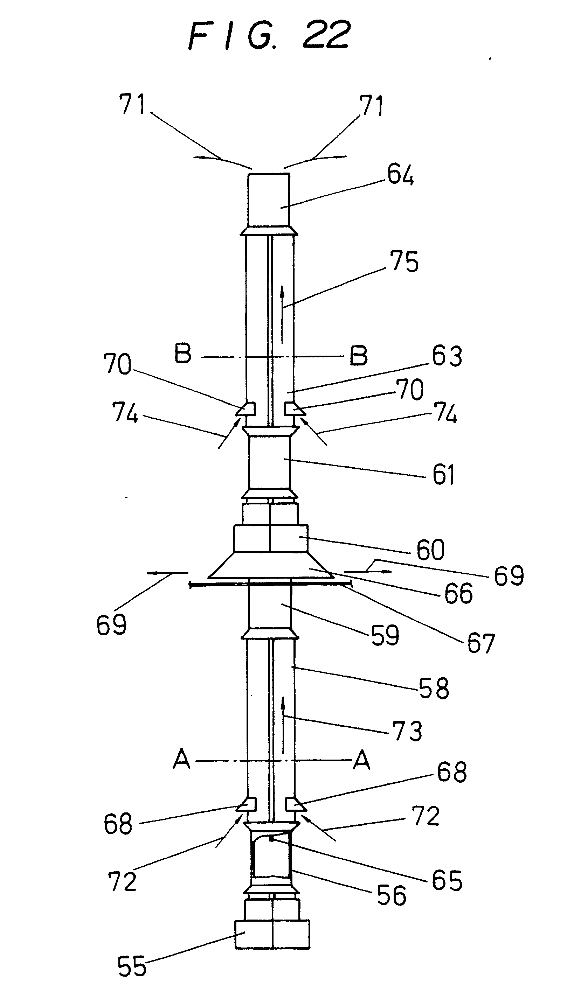

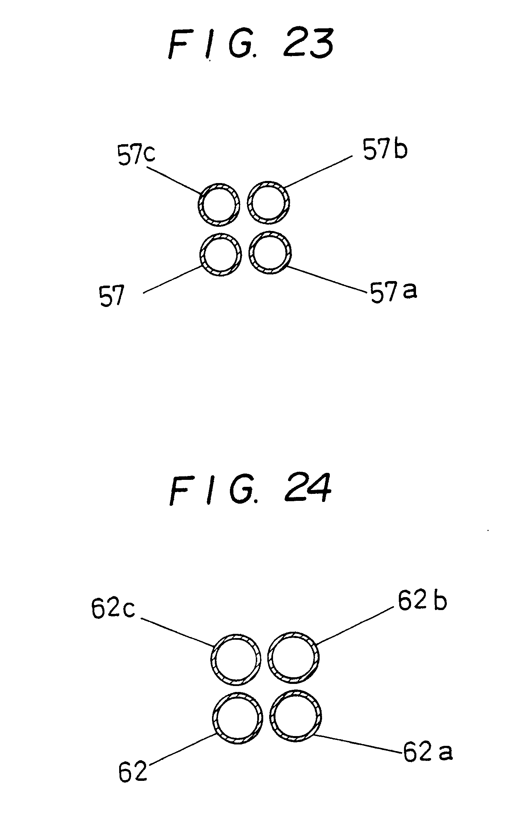

Figs. 22 and 23 illustrate a two-stage construction according to another embodiment of the present invention, which consists of an upper collective tubular casing and a lower collective tubular casing that are connected together for the air and water communication. For the lower collective tubular casing 58 which consists of individual tubes 57, 57a, 57b, and 57c each of a diameter of 40cm, it includes a lower air chamber 55 located below the lower collective tubular casing 58 and connected thereto, an air joining tubing 56 located above the lower air chamber 55 and where air from the air chamber gathers, and a water-flow regulating tubing 59 located above the lower collective tubular casing 58 and connected thereto. For the upper collective tubular casing 63 which consists of individual tubes 62, 62a, 62b, and 62c each of a diameter of 45 cm, it includes an upper air chamber 60 located below the upper collective tubular casing 63 and connected to the top end of the lower water-flow regulating tube 59, an air joining tubing 61 located above the upper air chamber 60 and connected thereto, and a water-flow regulating tubing 64 located above the upper tubular casing 63 and connected thereto.

In this embodiment, it is described that each individual tube in the lower collective tubular casing 58 has a diameter of 40cm, and each of those in the upper collective tubular casing 63 has a diameter of 45cm. In either case, the diameter may be varied, depending upon the installation requirements. For example, the diameter may have the range of between the shown diameters and two times those diameters. The construction shown in Figs. 22 and 23 is designed to be installed in a dam that is 50m or more deep, for example. Therefore, each of the upper and lower collective tubular casings 58 and 63 has a length of about 20m, and each of the associated tubes such as the water-flow regulating tube has a length of between 3m and 5m. Such long structure develops a great difference in the hydraulic pressure between the upper and lower parts, thus increasing the volume of air in the upper part relative to the lower part. In this case, it is often better that the individual tubes should have a greater cross section. Each of the air joining tubes 56 and 61 receives air which is supplied from the corresponding air chamber at regular intervals, and provides an area that allows the air gather together, forming a single air mass or bubble. This air mass is divided through a divider plate 65 into four air masses or bubbles, each of which is rising through the corresponding individual tube.

A frusto-conical separator guide 66 is located below the upper air chamber 60, and a horizontal plate 67 is provided below the separator guide 66. The separator guide 66 includes inner and outer guides having like frusto-conical shapes, which are arranged at specific intervals. Those inner and outer guides separate air from water, allowing air to be introduced into the air chamber and delivering water onto the horizontal plate 67. Therefore, the water which is drawn through inlet ports 68 into the lower collective tubular casing 58 as indicated by an arrow 72 is being raised through the individual tubes toward the separator guide 66, as indicated by an arrow 73. Then, the water, which is separated from air by the separator guide 66, flows down onto the horizontal plate 67 as indicated by an arrow 69, gradually going down and thus causing a circulating flow around the lower collective tubular casing 58. Similarly, the water which is drawn through inlet ports 70 into the upper collective tubular casing 63 as indicated by an arrow 74 is being raised through the upper collective tubular casing 63 and then through the water-flow regulating tube 64, as indicated by an arrow 75, and reaches up to the surface. Above the surface, the water is being diffused in radial directions, as indicated by an arrow 71, and gradually goes down back into the waters, causing a circulating flow around the upper collective tubular casing 63. As readily understood from the above description, this dual construction can produce two circulating flows, one around the upper tubular casing and the other around the lower tubular casing.

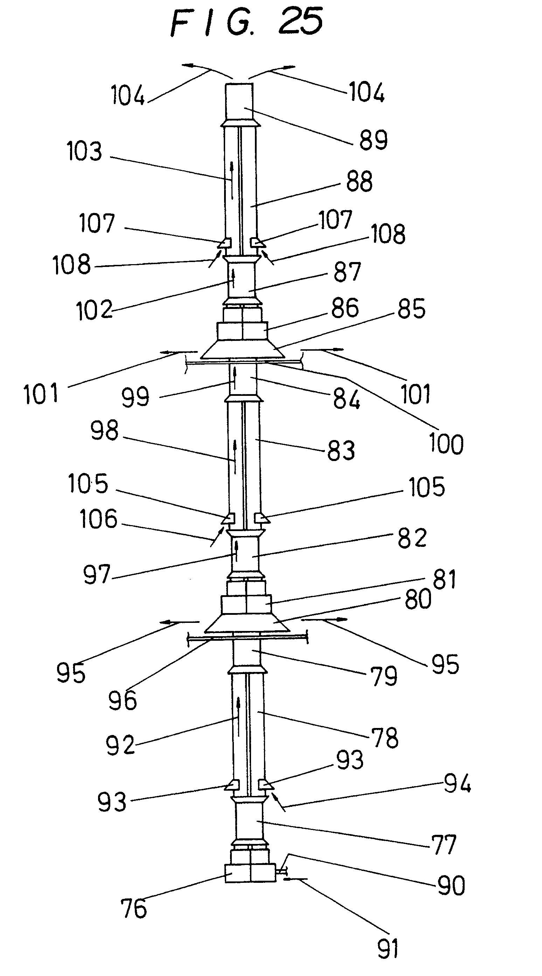

Fig. 25 is a variation of the construction shown in Fig. 22, which includes an additional collective tubular casing added above the two-stage construction.

In Fig. 25, the lower collective tubular casing 78 includes a lower air chamber 76 below it, an air joining tube 77 connected between the lower air chamber 76 and the tubular casing 78, and a water-flow regulating tube 79 connected to the tubular casing 78. Similarly, the intermediate collective tubular casing 83 includes an intermediate air chamber 81 connected to both the water-flow regulating tube 79 through a separator guide 80 and to the intermediate tubular casing 83, an air joining the tube 82 connected to the intermediate air chamber 81, and a water-flow regulating tube 84 connected to the intermediate tubular casing 83.

For the upper collective tubular casing 88, a separator guide 85 is provided between the intermediate water-flow regulating tube 84 and the tubular casing 88, and an upper air chamber 86 is connected through the separator guide 85 to the tubular casing 88. It further includes an air joining tube 87 above the air chamber 86, and a water flow regulating tube 89 above and the tubular casing 88.

For operation, an air under pressure is supplied through an air supply hose 90 into the lower air chamber 76 as indicated by an arrow 91, from which the air is delivered into the lower air joining tube 77 at regular intervals, as described in the preceding embodiments. The air gathers together within the air joining tube 77, forming a single, large air mass or bubble. This air mass is rising through the air joining tube 77, from which it is divided into four air bubbles. Those air bubbles are introduced into the corresponding individual tubes within the lower collective tubular casing 78 (four tubes are shown for the example), and are rising through the individual tubes as indicated by an arrow 92. Then, water is drawn through the inlet ports 93 into the individual tubes under the action of the rising air bubbles, as indicated by an arrow 94. Both the air bubbles and the water are further rising, and enter the water-flow regulating tube 79 and then the separator guide 80, where the air bubbles and the water are separated. The air bubbles are rising into the intermediate air chamber 81 while the water goes down onto the horizontal plate 96. Striking the horizontal plate 96 causes the water to disperse in the radial directions, as indicated by an arrow 95. The air bubbles within the air chamber 81 are further rising and enters the air joining tube 82, as indicated by an arrow 97, through which the air bubbles are introduced into the intermediate collective tubular casing 83, through which they are rising as indicated by an arrow 98. At the end of the tubular casing 83, the air bubbles enter the separator guide 85 via the water-flow regulating tube 84, as indicated by an arrow 99, where the air bubbles and the water are separated, allowing the air bubbles to enter the upper air chamber 86 and allowing the water to disperse against the horizontal plate 100 in the radial directions as indicated by an arrow 101. The air bubbles within the upper air chamber 86 are rising, as indicated by an arrow 102, entering the air joining tube 87 through which they are further rising through the upper collective tubular casing 88 as indicated by an arrow 103 and then through the flow-regulating tube 89. Through the flow-regulating tube, the water is dispersed in the radial directions on the surface, as indicated by an arrow 104. While the air bubbles are rising through the intermediate collective tubular casing 83, water is drawn through inlet ports 105 into the tubular casing 83 under the action of the air bubbles, as indicated by an arrow 106, and is rising together with the rising air bubbles as indicated by an arrow 98. When entering the separator tube 85, the air bubbles and the water are separated, allowing the water to strike down against the horizontal plate 100 and disperse in the radial directions as described before. The water which is drawn through the inlet ports 107 into the upper collective tubular casing 88 as indicated by an arrow 108 is rising through the tubular casing 88 as indicated by an arrow 103, arriving at the flow-regulating tube 89 from which the water is jetted and dispersed in the radial directions as indicated by an arrow 104.

The construction described above provides three circulating flows around the three different collective tubular casings, one being caused by the water drawn through the inlet ports 93 and dispersed along the horizontal plate 96 in the radial direction, the second being caused by the water drawn through the inlet ports 105 and dispersed along the horizontal plate 100 in the radial directions, and the third being caused by the water drawn through the inlet ports 107 and jetted through the flow-regulating tube 89 and dispersed in the radial directions. Thus, the quality of the waters around those three different areas can be improved so that they can contain more oxygen. This has the accompanying effect of promoting the growth of fishes and other microbioorganisms living in the waters. This also allows the microorganisms to be processed.

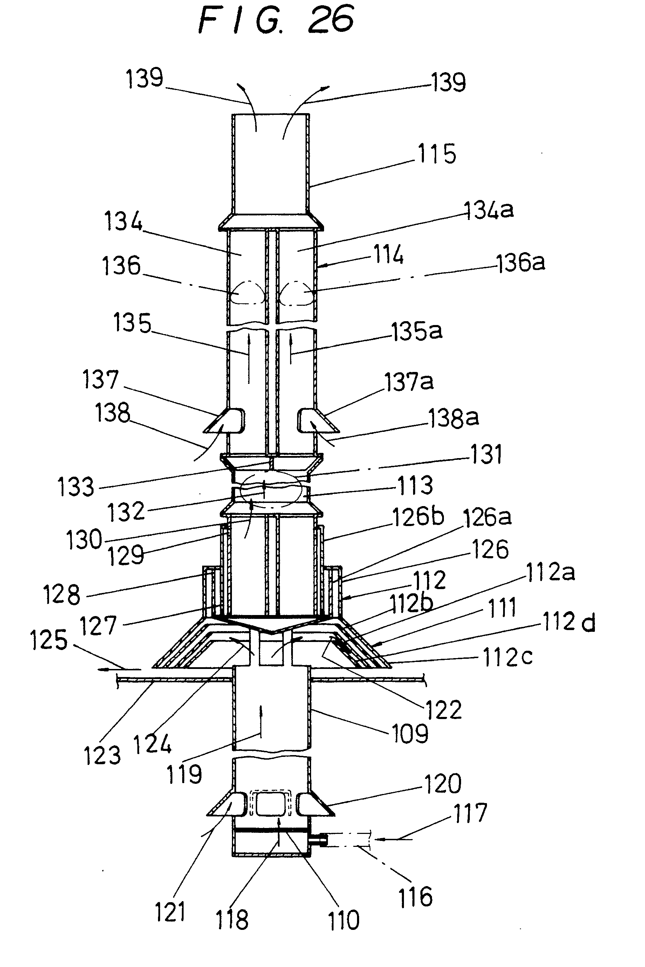

The embodiment shown in Fig. 26 provides a combination of a single collective tubular casing and an air diffusion tubing located below the tubular casing

As shown in Fig. 26, the construction provided by the embodiment includes a collective tubular casing 114 and an air diffusion tubing 109. The air diffusion tubing 109 is located below the colletive tubular casing 114, and includes an air diffusing pipe 110 which is disposed below the air diffusing tubing 109 across it. A separator guide 111 is located above the air diffusion tubing 109, and includes frusto-conical guide members 112a, 112b, 112c and 112d which are spaced away from each other. An air chamber 112 above the air diffusion tubing 109 is connected to the air diffusion tubing 109 and to an air joining tubing 113 located above the air chamber 112, above which the collective tubular casing 114 is located. The collective tubular casing 114 is connected to a flow-regulating tubing 115 which is located above it. All of the above-mentioned parts are communicated internally with each other, allowing the air and water to be rising through the passages formed by the different parts.

The operation of the above-described embodiment is now described. An air under pressure is supplied through an air supply hose 116 into the air diffusing pipe 110, as indicated by an arrow 117. Through the air diffusion pipe 110, the air is rising in minute air bubbles as indicated by an arrow 118, entering the air diffusion tubing 109 above the air diffusion pipe 110. Those minute air bubbles are further rising through the air diffusion tubing 109, as indicated by an arrow 119, and water is drawn through inlet ports 120 into the air diffusing tubing 109 under the action of the air bubbles, as indicated by an arrow 121. The water and air bubbles are mixed together, and the oxygen contained in the air bubbles dissolves into the water. The water-air mixture is rising as indicated by an arrow 124, and enters the separator guide 111, where the water and air are separated. The water goes down onto the frusto-conical guide members 112a, 112b, 112c, and 112d within the separator guide 111, as indicated by an arrow 122. Striking the guide members, the water is guided along those members onto the horizontal plate 123 and dispersed along the plate 123 in the radial directions as indicated by an arrow 125. The air, which is separated from the water, is rising and is introduced into the outer air room 126 within the air chamber 112. Within the air chamber 112, the air gathers in the intermediate and inner air rooms 126a and 126b, depressing the water present inside the air chamber 112 down to the level where the communicating port 127 between the inner and intermediate air rooms is located. When the water level reaches that port 127, the air present in the air chamber 112 is delivered at one time through the communicating ports 127, 128 and 129 into the air joining tubing 113, as indicated by an arrow 130. Although the delivery speed of air through the different communicating ports differs, a single, large air mass or bubble 131 can be formed within the air joining tube 113, and is rising through the tube 113 as indicated by an arrow 132. Passing through the tube 113, the air bubble 131 reaches the air divider plate 133, through which the air bubble is divided into smaller air bubbles, which are rising through the corresponding tubes 134, 134a in the collective tubular casing 114, as indicated by arrows 135 and 135a. As the air bubbles are rising through the tubes so that they closely contact the inner wall of the tube, as indicated by the dot-dash lines 136 and 136a, they develop a vacuum or negative pressure behind them, drawing water under the suction of the vacuum through the inlet ports 137 and 137a into the tubes, as indicated by arrows 138 and 138a. The water drawn in the tubes is being raised under the action of the preceiding air bubbles, and is jetted through the flow regulating tube 115, dispersing on the surface in the radial directions as indicated by an arrow 139. Thus, two circulating flows are produced, one around the air diffusion tube 109 and the other around the collective tubular casing 114. In this case, the quality of the waters can be improved at the two areas. The air diffusing tube below the collective tubular casing can atomize the air introduced, and the oxygen contained in the air can dissolve into the water with improved efficiency. This embodiment is more effective when it is used for the deep waters such as dams, etc., in order to increase the amount of oxygen to be contained in the water that is located deep, thereby improving its quality. That is, the water that is located on the surface and contains much oxygen can go down into the deep by the circulating flow of a jet of water that is caused by the upper collective tubular casing, and meet the water portion that is located and contains less oxygen. Thus, the quality of the water can be improved without relying on the oxygen contained in the air supply.

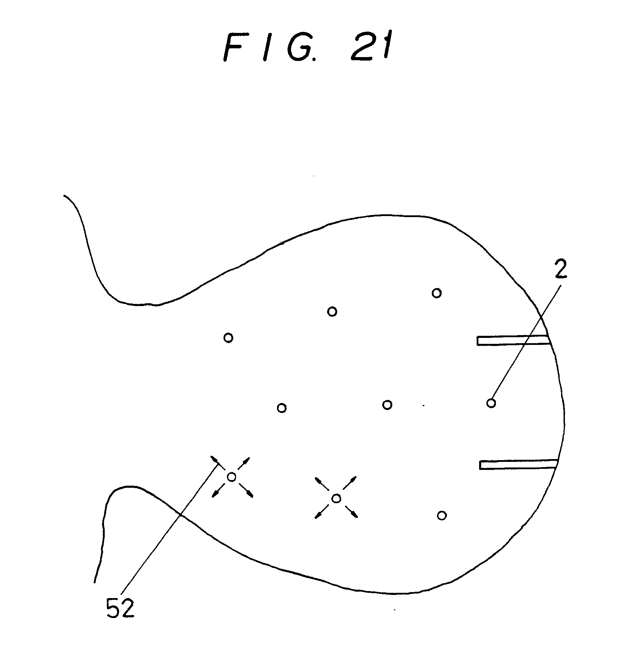

The constructional and operational features of the various forms of the collective tubular casing according to the present invention have been described, and in order to help better understand those features, a typical example of actual usage of any of those forms is now illustrated by referring to Fig. 21. Fig. 21 shows the example in which several tubular casings 2 are to be installed at appropriate intervals in a sea port or bay in the cold climate regions. When any of those collective tubular casings is installed, it is placed in its vertical position deep into the water, with its bottom end located near to the bottom of the water and its top end located about 5 m deep beneath the water surface. Then, a compressed air is introduced into the air chamber from any external air supply source such as air compressor. The air gathers upwardly in the air chamber and then is released from the air chamber, flowing into the individual tubular passages usually in the form of tubes. As the air is rising through each of the tubular passages, it forms into an air mass like a bullet shape. Following the first air mass, another air mass is formed in the same manner as described above. Thus, the portion of water which is sandwiched between the preceding and following air masses is rising through the tubular passages under both the suction and boost actions of the air masses. That portion of water located near the bottom contains less oxygen, and is rising toward the surface, from which it is jetted and diffused in radial directions as indicated by an arrow 52. Then, the portion of water located on the surface and containing enough oxygen is in turn being lowered toward the bottom under the action of the produced convection. Exchanging those portions of water between the bottom and surface improves the oxygen content in the water rapidly. This water circulation by convection also provides an effective anti-freezing means. Since the portion of water located near the bottom is usually maintained to a temperature of 4°C at the lowest, the water surface can also be maintained to the temperature of 4°C or higher by causing the water to circulate by convection between the bottom and surface.

Although the present invention has been described by way of the several preferred embodiments thereof, it should be understood that various changes and modifications may be made without departing from the scope of the invention.

## Claims

1. A water circulation installation in an extensive body of water such as a reservoir or like, the installation being arranged to cause large water circulation between the water surface and bottom by buoyant action of single air bubbles having a certain volume and being intermittently supplied into the lower end of column which is vertically installed in the body of the water, the installation comprising:
a column vertically installed in the body of water, the upper end of the column being spaced, e.g. by 5 to 10 m, below the surface of the water and there being no obstruction above the said upper end; and
an air lift pump having an air supply chamber (3; 31) located below the column and arranged to supply pressurized air at intervals into the lower end of the column;
characterised in that the column has a plurality of separate longitudinal passages (1) with a small bore, preferably at most 90 cm in diameter, which communicate with the air supply chamber (3; 31);
the air supply chamber has a common air space which communicates with all the passages;
the air supply chamber (3; 31) receives pressurized air continuously and releases stored pressurized air into the column at one time after a certain volume of air is stored, to raise a single air bubble having a certain volume through the column at intervals, and to raise and draw water located under the column through the column under the buoyant force of large air bubbles.

2. An installation as claimed in claim 1, in which there are from two to twenty passages (1).

3. An installation as claimed in claim 1 or 2, in which the air supply chamber (3) comprises an outer jacket (12) mounted around a lower peripheral wall of the column and air communicating apertures (19) through which air passes into the passages (1).

4. An installation as claimed in claim 1 or 2, in which the air supply chamber (31) comprises an outer jacket (32) connected to the bottom end of the column through a single air communicating passage (34).

5. An installation as claimed in claim 1, comprising a multiple-stage construction having a plurality of columns, each column including a plurality of air-and-water passages and an air chamber located below each column, successive columns communicating with each other through the intervening air chamber.

6. An installation as claimed in any of claims 1 to 4, further comprising air diffusion tubing located below the air chamber and connected through the air chamber to the column.

7. An installation as claimed in any of claims 1 to 6, in which the column comprises a tubular casing containing individual tubes defining the passages.

8. An installation as claimed in any of claims 1 to 6, in which the column comprises a tubular casing whose interior is subdivided into the plurality of longitudinal passages.

9. An installation as claimed in any preceding claim, in which the passages are up to 80 cm, e.g. 30 to 50 cm, in diameter.

**Revendications**

1. Installation de circulation d'eau dans un vaste corps d'eau par exemple un réservoir ou analogue, l'installation étant agencée de manière à provoquer une grande circulation d'eau entre la surface et le fond de l'eau par l'action portante de bulles d'air individuelles présentant un certain volume et étant distribuées par intermittence dans l'extrémité inférieure de la colonne qui est installée verticalement dans le corps d'eau, l'installation comprenant :
une colonne installée verticalement dans le corps d'eau, l'extrémité supérieure de la colonne étant espacée, par exemple de 5 à 10 m, sous la surface de l'eau et aucune obstruction n'étant présente au-dessus de ladite extrémité supérieure; et
une pompe de levage d'air comportant une chambre d'alimentation en air (3; 31) située en dessous de la colonne et agencée pour fournir de l'air sous pression par intervalles dans l'extrémité inférieure de la colonne; caractérisée en ce que la colonne comporte une pluralité de passages longitudinaux séparés (1) avec un petit alésage, de préférence de 90 cm de diamètre au plus, qui communiquent avec la chambre d'alimentation en air (3; 31);
la chambre d'alimentation en air comporte un espace d'air commun qui communique avec tous les passages;
la chambre d'alimentation en air (3; 31) reçoit de l'air sous pression en continu et libère de l'air sous pression stocké dans la colonne à un moment donné une fois qu'un certain volume d'air est stocké, pour lever une bulle d'air individuelle d'un certain volume dans la colonne par intervalles, et pour lever et tirer l'eau située en dessous de la colonne dans la colonne par la force portante de grosses bulles d'air.

2. Installation selon la revendication 1, dans laquelle sont prévus deux à vingt passages (1).

3. Installation selon la revendication 1 ou 2, dans laquelle la chambre d'alimentation en air (3) comprend une enveloppe extérieure (12) montée autour d'une paroi périphérique inférieure de la colonne et des ouvertures de communication d'air (19) par lesquelles l'air passe dans les passages (1).

4. Installation selon la revendication 1 ou 2, dans laquelle la chambre d'alimentation en air (31) comprend une enveloppe extérieure (32) reliée à l'extrémité inférieure de la colonne par un seul passage de communication d'air (34).

5. Installation selon la revendication 1, comprenant une construction à plusieurs étages comportant une pluralité de colonnes, chaque colonne comprenant une pluralité de passages d'air et d'eau et une chambre d'air située en dessous de chaque colonne, les colonnes successives communiquant les unes avec les autres par l'intermédiaire de la chambre d'air interposée.

6. Installation selon l'une quelconque des revendications 1 à 4 comprenant en outre un tubage de diffusion d'air situé en dessous de la chambre d'air et relié par l'intermédiaire de la chambre d'air à la colonne.

7. Installation selon l'une quelconque des revendications 1 à 6, dans laquelle la colonne comprend un boîtier tubulaire contenant des tubes individuels formant les passages.

8. Installation selon l'une quelconque des revendications 1 à 6, dans laquelle la colonne comprend un boîtier tubulaire dont l'intérieur est subdivisé en la pluralité de passages longitudinaux.

9. Installation selon l'une quelconque des revendications précédentes, dans laquelle les passages font jusqu'à 80 cm de diamètre, par exemple 30 à 50 cm de diamètre.

## Ansprüche

1. Eine Wasserumwälzanlage für einen großräumigen Wasserkörper wie z.B. einen Behälter oder dergleichen, wobei die Anlage so angeordnet ist, daß eine starke Wasserzirkulation zwischen der Wasseroberfläche und dem Boden durch das Aufschwimmen einzelner Luftblasen mit einem bestimmten Volumen bewirkt wird, die intermittierend dem unteren Ende einer Säule zugeführt werden, welche vertikal im Wasserkörper installiert ist, wobei die Anlage folgendes enthält:
eine vertikal im Wasserkörper installierte Säule, deren oberes Ende einen Abstand z.B. von 5 bis 10 m unter der Wasseroberfläche aufweist und wobei oberhalb des genannten oberen Endes keinerlei Hindernis vorhanden ist, und eine Mammutpumpe mit einer Luftzuführkammer (3, 31), die unterhalb der Säule liegt und so angeordnet ist, daß am unteren Ende der Säule Druckluft in Intervallen zugeführt wird,
dadurch gekennzeichnet, daß die Säule über eine Vielzahl separater Längsdurchtrittsöffnungen (1) mit kleiner Bohrung verfügt, die vorzugsweise einen Durchmesser von max. 90 cm hat und mit der Luftzuführkammer (3, 31) in Verbindung steht, daß die Luftzuführkammer einen gemeinsamen Luftraum aufweist, der mit sämtlichen Durchtrittsöffnungen in Verbindung steht,
daß die Luftzuführkammer (3, 31) ständig unter Druck stehende Luft aufnimmt und gespeicherte Druckluft nach Speicherung eines bestimmten Luftvolumens auf einmal in die Säule freigibt, um eine einzelne Luftblase mit einem bestimmten Volumen in Intervallen durch die Säule aufsteigen zu lassen und um unter der Säule befindliches Wasser mittels der Auftriebskraft der großen Luftblasen durch die Säule aufwärts zu bewegen und hochzuziehen.

2. Eine Anlage nach Anspruch 1, die zwei bis zwanzig Durchtrittsöffnungen (1) aufweist.

3. Eine Anlage nach Anspruch 1 oder 2, bei der die Luftzuführkammer (3) einen äußeren Mantel (12) enthält, der rund um eine untere Umfangswand der Säule angeordnet ist, sowie Luftverbindungsöffnungen (19), durch die Luft in die Durchtrittsöffnungen (1) gelangt.

4. Eine Anlage nach Anspruch 1 oder 2, bei der die Luftzuführkammer (31) einen äußeren Mantel (32) enthält, der über einen einzelnen Luftverbindungsdurchtritt (34) mit dem unteren Ende der Säule verbunden ist.

5. Eine Anlage nach Anspruch 1, enthaltend eine mehrstufige Konstruktion mit einer Vielzahl von Säulen, wobei jede Säule eine Vielzahl von Luft-und-Wasser-Durchtrittsöffnungen und eine unterhalb jeder Säule angeordnete Luftkammer enthält und wobei aufeinanderfolgende Säulen miteinander durch die dazwischenliegende Luftkammer verbunden sind.

6. Eine Anlage gemäß einem der Ansprüche 1 bis 4, die weiterhin Luftdiffusionsleitungen enthält, welche unterhalb der Luftkammer liegen und über die Luftkammer mit der Säule verbunden sind.

7. Eine Anlage nach einem der Ansprüche 1 bis 6, wobei die Säule ein rohrförmiges Gehäuse einschließt, welches einzelne Rohre zur Begrenzung der Durchtrittsöffnungen enthält.

8. Eine Anlage nach einem der Ansprüche 1 bis 6, bei der die Säule ein rohrförmiges Gehäuse enthält, welches innen in eine Vielzahl von Längsdurchtrittsöffnungen unterteilt ist.

9. Eine Anlage nach einem der vorherigen Ansprüche, bei der die Durchtrittsöffnungen einen Durchmesser bis 80 cm, z.B. 30 bis 50 cm, aufweisen.

# F I G. 1

# F I G. 2

FIG. 3

FIG. 4

4

5

FIG. 5

FIG. 6

6

7

FIG. 7

8

FIG. 8

9

FIG. 9

10

FIG. 10

11

# F I G. 13

# F I G. 14

# F I G. 15

# F I G. 16

# F I G. 17

# F I G. 18

# F I G. 19

54          54a

53

54

# F I G. 20

54c          54b

53

54          54a

# F I G. 21

# F I G. 22

F I G. 23

57c

57b

57

57a

F I G. 24

62c

62 b

62

62 a

# F I G. 25

# F I G. 26